# EUROPEAN PATENT APPLICATION

(11) **EP 3 297 333 A1**
(43) Date of publication of application: **21.03.2018**
(21) Application number: 15891712.0
(22) Date of filing: 15.12.2015
(51) Int. Cl.: H04W 48/08, H04W 48/18

(54) **ACCESS METHOD AND CORRESPONDING ACCESS NODE, TERMINAL AND COMMUNICATION NETWORK**

(30) Priority: 11.05.2015 CN 201510236446
(71) Applicant: ZTE Corporation, Shenzhen, Guangdong 518057 (CN)
(72) Inventor: ZHENG, Fangting, Shenzhen Guangdong 518057 (CN); WU, Se, Shenzhen Guangdong 518057 (CN); ZONG, Zaifeng, Shenzhen Guangdong 518057 (CN); QIANG, Yuhong, Shenzhen Guangdong 518057 (CN); YE, Minya, Shenzhen Guangdong 518057 (CN)
(74) Representative: Brevalex
(86) International application number: PCT/CN2015/097459
(87) International publication number: WO 2016/180018

(57) **Abstract**

Disclosed are an access method and a corresponding access node, a terminal and a communication network. The access node is connected to a plurality of sub business networks, and the plurality of sub business networks is set for: providing services for different businesses; one sub business network is selected for a terminal from the plurality of sub business networks after a message about an access request sent by the terminal is received by the access node; and then, the access node sends the message about the access request of the terminal to the selected sub business network. A terminal also can select, according to information about a plurality of obtained sub business networks, one or more sub business networks therefrom as sub business networks decided to be accessed.

## Description

### TECHNICAL FIELD

The present disclosure relates to, but is not limited to, the field of communications.

### BACKGROUND

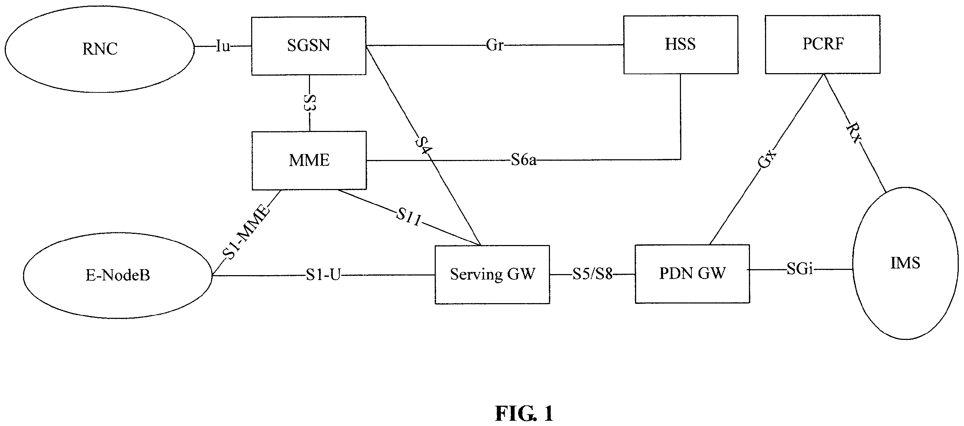

A project of the next-generation mobile wireless network in the 3rd Generation Partnership Project (3GPP) is called System Architecture Evolution (SAE). As shown in FIG. 1, the architecture of the SAE includes the following network elements:
an Evolved Radio Access Network (E-RAN), which can provide higher upstream and downstream rates, lower transmission delay and more reliable wireless transmission; a network element included in the E-RAN is an Evolved NodeB (eNodeB), which provides radio resources for the access of a terminal;
a Home Subscriber Server (HSS), which permanently stores user's subscription data;
a Mobility Management Entity (MME), which is a control plane functionality entity and a server for temporarily storing user data, and takes charge of: managing and storing contexts of a piece of User Equipment (UE) (such as a UE/user ID, a mobility management state, and a user security parameter), allocating a temporary ID for a user; when the UE stays in a tracking area or the network, authenticating the user; processing all non-access stratum messages between the MME and the UE; and triggering paging in the SAE;
a serving Gateway (GW), which is a user plane entity, and takes charge of: user plane data routing processing; ending downstream data of the UE in an idle state; managing and storing SAE bearer contexts, such as an IP bearer service parameter and information about internal routing information in the network, of the UE; the serving GW being an anchor point of a user plane in the 3GPP system; a user can have only one serving GW in one moment;
a Packet Data Network (PDN) GW, which takes charge of: enabling the UE to access a PDN, and allocating a user IP address; the PDN GW being a mobile anchor point of a 3GPP and non-3GPP access system; the user being able to access multiple PDN GWs at the same time; and
a Policy and Charging Rule Functionality (PCRF), which generates a Quality of Service (QoS) rule and a charging rule for controlling user data transfer mainly according to service information, user's subscription information and configuration information of operators; the functionality entity being also able to control establishment and release of bearing in an access network.

From 2G mobile network to 4G mobile network, a Core Network (CN) is included. The CN provides network access for a terminal. The reason why it is called the CN is because it generally provides high capacity and high throughput, converges a lot of wireless accesses, and is deployed in a centralized manner. The centralized deployment of the CN has the following obvious advantages. That is, network construction is simple, data is planned uniformly, and it is easy to maintain. However, the centralized deployment of the CN also has the following disadvantages. Since the centralized deployment causes devices to be in single and complex configuration, it is difficult to develop new services and upgrading and replacing will generate a huge influence.

### SUMMARY

The following is an overview of the theme elaborated in this application. The overview is not intended to limit the scope of protection of the claims.

At present, many organizations in the world start researches on the next-generation mobile network; there are requirements of private networks, such as Internet of Things, Internet of Vehicles, and medical network in the next-generation mobile network, and a centrally deployed giant network cannot provide differentiated business requirements of various private networks.

The disclosure presents the following solution.

An access method is provided, which is applied to an access node connected to multiple sub business networks. The multiple sub business networks are arranged to provide services for different businesses. The method includes the following actions.

An access request message sent by a terminal is received.

A sub business network is selected for the terminal from the multiple sub business networks.

The access request message of the terminal is sent to the selected sub business network.

Optionally, the action of selecting, for the terminal, a sub business network from the multiple sub business networks includes the following actions.

According to selecting policies, a sub business network is selected for the terminal from the multiple sub business networks; the selecting policies include one or more of the following policy factors:
a terminal attribute;
a terminal service;
a sub business network load;
a sub business network available state; or
a sub business network that the terminal has accessed.

Optionally, the selecting policies include one or more of the following policies:
selecting the sub business network corresponding to a terminal attribute of the terminal;
selecting the sub business network corresponding to a terminal service of the terminal; or
selecting the sub business network corresponding to a terminal attribute and a terminal service of the terminal.

Optionally, the selecting policies include one or more of the following policies:
when there is no sub business network corresponding to at least one of the terminal attribute or the terminal service of the terminal, selecting a default sub business network for the terminal; or
when the non-default sub business network corresponding to at least one of the terminal attribute or the terminal service of the terminal is unavailable or the non-default sub business network's load is higher than a set threshold, selecting a default sub business network for the terminal.

Optionally, the selecting policies include: when the terminal has accessed to a sub business network, preferentially selecting the sub business network that the terminal has accessed.

Optionally, the access request message sent by the terminal carries one or more of the following information:
information about the terminal attribute;
information about the terminal service; or
information about the sub business network that the terminal has accessed.

Optionally, the terminal attribute includes one or more of the followings: a common mobile network terminal, an Internet of Things terminal, an Internet of Vehicles terminal, an industrial control terminal, a telemedicine terminal or a low-mobility terminal.

The terminal service includes one or more of the followings: a mobile Internet service, a virtual private network service, an Internet of Things service, an Internet of Vehicles service, an industrial control service, a telemedicine service, a voice service, and a Device to Device (D2D) service.

Optionally, the access request message sent by the terminal carries information about one or more sub business networks that the terminal decides to access.

The action of selecting, for the terminal, a sub business network from the multiple sub business networks includes the following actions. A sub business network is selected for the terminal from the sub business networks that the terminal decides to access.

Optionally, the method further includes the following actions. One or more of the following information is broadcasted to the terminal:
information about the multiple sub business networks connected to the access node, or information about the current available sub business network in the multiple sub business networks; or
a corresponding relationship between at least one of the terminal attribute or the terminal service and the sub business network.

Optionally, the sub business network is a sub business network comprised in a CN in a mobile network architecture or a sub business network that provides services for the terminal in the next-generation mobile network architecture. The access node is a base station in the mobile network architecture or a terminal access device in the next-generation mobile network architecture.

Optionally, the access request message sent by the terminal includes one or more of the following messages:
an attachment request message; or
a location area update message.

The access node is the base station in the mobile network architecture or the terminal access device in the next-generation mobile network architecture.

An access method is provided, which is applied to the terminal; the method includes the following actions.

Information about multiple sub business networks is acquired;
One or more sub business networks are selected from the multiple sub business networks as the sub business networks that the terminal decides to access.

The access request message is sent to the access node. The message carries information about the sub business networks that the terminal decides to access.

Optionally, the action of selecting one or more sub business networks from the multiple sub business networks includes the following actions. According to selecting policies, one or more sub business networks are selected from the multiple sub business networks.

The selecting policies include one or more of the following policy factors:
the terminal attribute;
the terminal service; and
the sub business network that the terminal has accessed.

Optionally, the selecting policies include one or more of the following policies:
selecting the sub business network corresponding to a terminal attribute of the terminal;
selecting the sub business network corresponding to a terminal service of the terminal;
selecting the sub business network corresponding to a terminal attribute and a terminal service of the terminal; or
when the terminal has accessed a sub business network, preferentially selecting the sub business network that the terminal has accessed.

Optionally, the method further includes the following actions.

The terminal acquires the corresponding relationship between at least one of the terminal attribute or the terminal service and the sub business network, from a broadcast message sent by the access node.

Optionally, the terminal attribute of the terminal includes one or more of a common mobile network terminal, an Internet of Things terminal, an Internet of Vehicles terminal, an industrial control terminal, a telemedicine terminal and a low-mobility terminal.

The terminal service of the terminal includes one or more of a mobile Internet service, a virtual private network service, an Internet of Things service, an Internet of Vehicles service, an industrial control service, a telemedicine service, a voice service, and D2D service.

Optionally, the terminal is in the mobile network architecture, and the access node is the base station in the mobile network architecture or the terminal access device in the next-generation mobile network architecture.

Optionally, the action of acquiring the information about the multiple sub business networks includes the following actions.

The information about the multiple sub business networks is acquired from a broadcast message sent by the access node.

An access node is provide, which includes a first interface module and a first network selecting module.

The first interface module is arranged to receive the access request message sent by the terminal.

The first network selecting module is arranged to select, for the terminal, the sub business network from the multiple sub business networks connected to the access node. The multiple sub business networks are arranged to provide services for different businesses.

A second interface module is arranged to send the access request message of the terminal to the selected sub business network.

Optionally, the first network selecting module is arranged to,
according to the selecting policies, select, for the terminal, a sub business network from the multiple sub business networks. The selecting policies include one or more of the following policy factors:
the terminal attribute;
the terminal service;
the sub business network load;
the sub business network available state; or
the sub business network that the terminal has accessed.

Optionally, the selecting polices according to which the first network selecting module selects the sub business network include one or more of the following policies:
selecting the sub business network corresponding to a terminal attribute of the terminal;
selecting the sub business network corresponding to a terminal service of the terminal; or
selecting the sub business network corresponding to a terminal attribute and a terminal service of the terminal.

Optionally, the selecting polices according to which the first network selecting module selects the sub business network further include one or more of the following policies:
when there is no sub business network corresponding to at least one of the terminal attribute or the terminal service of the terminal, selecting a default sub business network for the terminal;
when the non-default sub business network corresponding to at least one of the terminal attribute or the terminal service of the terminal is unavailable or the non-default sub business network's load is higher than the set threshold, selecting a default sub business network for the terminal.

Optionally, the selecting polices according to which the first network selecting module selects the sub business network include: when the terminal has accessed to a sub business network, preferentially selecting the sub business network that the terminal has accessed.

Optionally, the access request message sent by the terminal carries one or more of the following information:
the information about the terminal attribute;
the information about the terminal service; or
the information about the sub business network that the terminal has accessed.

Optionally, the terminal attribute includes one or more of the followings: a common mobile network terminal, an Internet of Things terminal, an Internet of Vehicles terminal, an industrial control terminal, a telemedicine terminal and a low-mobility terminal.

The terminal service includes one or more of the followings: a mobile Internet service, a virtual private network service, an Internet of Things service, an Internet of Vehicles service, an industrial control service, a telemedicine service, a voice service, or a D2D service.

Optionally, the access request message sent by the terminal carries the information about one or more sub business networks that the terminal decides to access. The first network selecting module is arranged to select a sub business network for the terminal from the sub business networks that the terminal decides to access.

Optionally, the first interface module is further arranged to broadcast one or more of the following pieces of information to the terminal:
the information about the multiple sub business networks connected, or the information about the current available sub business network in the multiple sub business networks; or
a corresponding relationship between at least one of the terminal attribute or the terminal service and the sub business network.

Optionally, the sub business network is the sub business network included in the CN in the mobile network architecture or the sub business network that provides services for the terminal in the next-generation mobile network architecture. The access node is the base station in the mobile network architecture or the terminal access device in the next-generation mobile network architecture.

Optionally, the access request message sent by the terminal, which is received by the first interface module, includes one or more of the following messages:
the attachment request message; or
the location area update message.

The access node is the base station in the mobile network architecture or the terminal access device in the next-generation mobile network architecture.

A communication network is provided, which includes an access network and a business network.

The business network includes multiple sub business networks. The multiple business networks are arranged to provide services for different businesses.

The access network includes the access node which is connected to the multiple sub business networks. The access node is arranged to select the sub business network for the terminal to access from the multiple sub business networks connected to the access node.

Optionally, the access node is the above access node.

A terminal is provided, which includes an interface module and a second network selection module.

The interface module is arranged to acquire the information about the multiple sub business networks, and send the access request message to the access node. The message carries the information about the sub business network that the second network selection module decides to access; and

The second network selection module is arranged to select one or more sub business networks from the multiple sub business networks acquired by the interface module as the sub business network that the second network selection module decides to access.

Optionally, the operation of selecting, by the second network selecting module, one or more sub business networks from the multiple sub business networks acquired by the interface module includes the following operations.

According to the selecting policies, one or more sub business networks are selected from the multiple sub business networks acquired by the interface module; the selecting policies include one or more of the following policy factors:
the terminal attribute;
the terminal service; or
the sub business network that the terminal has accessed.

Optionally, the selecting polices according to which the second network selecting module selects one or more sub business networks include one or more of the following policies:
selecting the sub business network corresponding to a terminal attribute of the terminal;
selecting the sub business network corresponding to a terminal service of the terminal;
selecting the sub business network corresponding to a terminal attribute and a terminal service of the terminal; or
when the terminal has accessed a sub business network, preferentially selecting the sub business network that the terminal has accessed.

Optionally, the interface module is further arranged to acquire, from the broadcast message sent by the access node, a corresponding relationship between at least one of the terminal attribute or the terminal service and the sub business network.

Optionally, the terminal attribute of the terminal includes one or more of a common mobile network terminal, an Internet of Things terminal, an Internet of Vehicles terminal, an industrial control terminal, a telemedicine terminal and a low-mobility terminal.

The terminal service of the terminal includes one or more of a mobile Internet service, a virtual private network service, an Internet of Things service, an Internet of Vehicles service, an industrial control service, an telemedicine service, a voice service, and a D2D service.

Optionally, the terminal is in the mobile network architecture, and the access node is the base station in the mobile network architecture or the terminal access device in the next-generation mobile network architecture.

Optionally, the interface module is arranged to:
acquire the information about the multiple sub business networks from the broadcast message sent by the access node.

A computer readable storage medium, in which a computer executable instruction is stored; the computer executable instruction is used for performing the above method.

The above solution deploys the differentiation of business networks as multiple sub business networks, which provide services for different businesses, thereby reducing the pressure of centralized deployment of the business networks. The terminal or the access node can flexibly select the sub business network which is suitable for access, so user experience is improved.

Other aspects can be understood after the accompanying drawings and detailed descriptions are read and understood.

### BRIEF DESCRIPTION OF DRAWINGS

FIG. 1 is an architecture diagram of SAE in the related art.
FIG. 2 is an architecture diagram of a communication network according to embodiment 1 of the disclosure.
FIG. 3 is an architecture diagram of an implementation example of the communication network in FIG. 2 in a 4G mobile network.
FIG. 4 is an architecture diagram of another implementation example of the communication network in FIG. 2 in a 4G mobile network.
FIG. 5 is a flowchart of an access method which is applied to an access node according to a second embodiment of the present disclosure.
FIG. 6 is a module diagram of an access node according to the second embodiment of the disclosure.
FIG. 7 is a flowchart of an access method which is applied to a terminal according to a third embodiment of the disclosure.
FIG. 8 is a module diagram of a terminal according to the third embodiment of the disclosure.
FIG. 9 is a flowchart of an access method which is applied to an access node according to the third embodiment of the disclosure.
FIG. 10 is a signaling flowchart of a first application example of the disclosure.
FIG. 11 is a signaling flowchart of a second application example of the disclosure.
FIG. 12 is a signaling flowchart of a third application example of the disclosure.
FIG. 13 is a signaling flowchart of a fourth application example of the disclosure.
FIG. 14 is a signaling flowchart of a five application example of the disclosure.
FIG. 15 is a signaling flowchart of a six application example of the disclosure.

### DETAILED DESCRIPTION

The embodiments of the disclosure are elaborated below with reference to the accompanying drawings. Note that, the embodiments in the application and the characteristics in the embodiments can be combined under the condition of no conflicts.

### First Embodiment

This embodiment relates to a communication network.

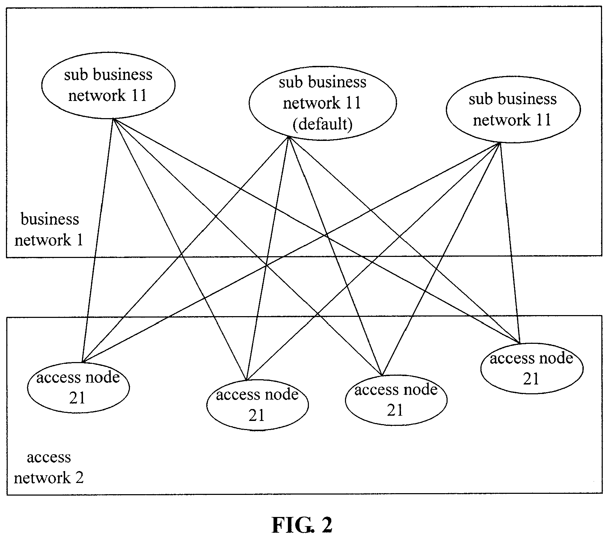

As shown in FIG. 2, the communication network includes a business network 1 and an access network 2. The business network (also called a business network layer) 1 includes multiple sub business networks 11. The multiple sub business networks 11 are arranged to provide services for different businesses. The access network (also called an access network layer or an access layer) 2 includes an access node 21 connected to the multiple sub business networks 11. The access node 21 is arranged to select a sub business network 11 for a terminal to access from the multiple sub business networks 11 connected to the access node. The sub business network 11 may be one or more visible physical entities, or one or more software functionality entities running on a physical device entity, which are realized by using a virtualization technology, or a software functionality entity running on a physical entity of access device (e.g. eNodeB). In the multiple sub business networks 11, one (or more) sub business network can be regarded as the default sub business network.

Although FIG. 2 shows three sub business networks, the number of sub business networks may be any integer greater than or equal to 2. Although FIG. 2 shows four access nodes 21, the number of access nodes 21 can be any positive integer. In the figure, although each access node 21 is connected to three sub business networks 11, it is only exemplary. The access network 2 includes at least one access node 21 connected to multiple sub business networks 11. For a single access node 2, the single access node 2 may only be connected to a part of sub business networks 11 in the business network 1.

Moreover, each sub business network 11 may be divided into multiple local networks in terms of areas. For a same area, the local networks of the multiple sub business networks 11 can be provided, and the access node 21 of the area is connected to the local networks of the multiple sub business networks 11 in the area. That is, the multiple sub business networks 11 cover the area at the same time, to provide services for different businesses in the area.

The business network 1 in the embodiment may be a CN in the mobile network architecture for example of 2G, 3G and 4G. The CN in the mobile network architecture includes multiple sub business networks 11 which are arranged to provide services for different businesses. Here, the businesses that the different sub business networks 11 serve may overlap. For example, it is possible to set a default sub business network, and the default sub business network can provide services for multiple businesses. In the next-generation mobile network architecture for example of 5G, there may not be clear boundary between the CN and the base station, at this point, the sub business network 11 is the sub business network providing services for the terminal in the next-generation mobile network architecture. The application is not limited to the mobile network architecture, and the business network 1 can also be a functionality entity providing services for businesses in other networks. The access node can be either the base stations in the mobile network architecture, such as BS, NodeB and eNodeB, or other access nodes with an access function, such as a relay station and an Access Point (AP). The access node can also be either the terminal access device in the next-generation mobile network architecture, or the functionality entity providing a network connection service for the terminal in other networks.

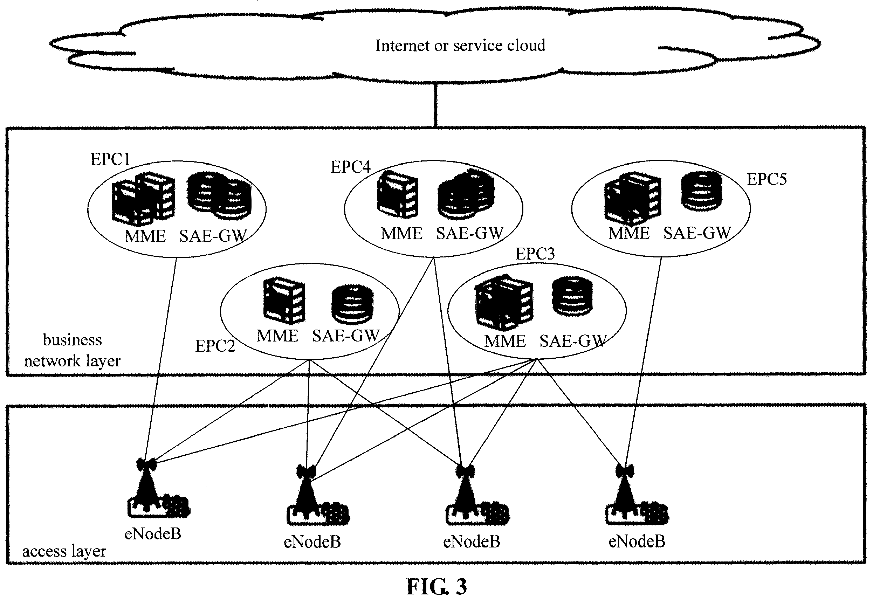

FIG. 3 shows an architecture diagram of an implementation example of the communication network based on a 4G mobile network architecture in the present embodiment. In the example, according to service characteristics and requirements, an Evolved Packet Core (EPC) network is deployed according to the service characteristics and divided into multiple sub business networks (also called sub EPC networks or sub CNs). In the figure, each oval containing MME and SAE-GW represents a local network of a sub business network, which is denoted by one of EPC1 to EPC5. As an example, EPC1 and EPC4 in the figure belong to the same sub business network, being dedicated to VoLTE voice services. EPC2 and EPC5 belong to another sub business network, being dedicated to the Internet of Things terminal. EPC3 belongs to another sub business network, being dedicated to the Internet of Vehicles terminal. The access node eNodeB is connected to the local networks of two or three sub business networks.

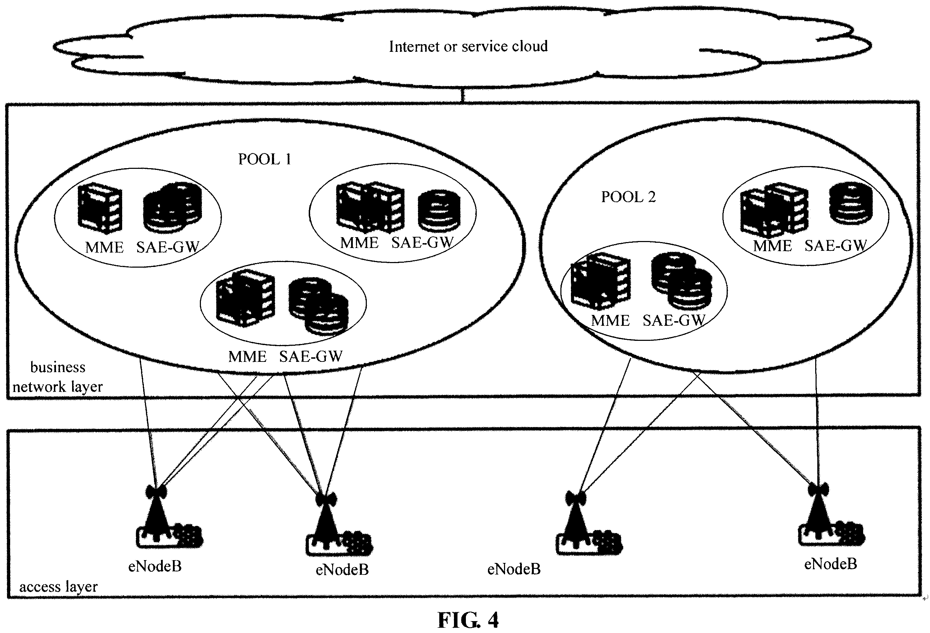

In order to solve disaster recovery backup of the MME and the SAE-GW, at present, an EPC device often adopts POOL networking. FIG. 4 is another architecture diagram of an implementation example of the communication network based on a 4G mobile network architecture in the present embodiment. The network architecture adopts a POOL networking mode; in the figure, two POOLs are showed, namely POOL1 and POOL2. Each POOL includes multiple groups of MME and SAE-GW devices, and the eNodeB corresponding to the POOL is connected to each MME in the POOL. As shown in the figure, a POOL in the present embodiment includes the local networks of the multiple sub business networks. As an example, the POOL1 includes the local networks of three sub business networks, the POOL2 includes the local networks of 2 sub business networks; each local network can also include a group of or multiple groups of MMEs and SAE-GWs. Each eNodeB is connected to each sub business network in the corresponding POOL.

In the communication of the present embodiment, the same physical location may be covered by multiple sub business networks.

When the terminal accesses (for example, when the terminal accesses initially, or when the terminal is in an idle state after accessing initially, and moves to another location area to initiate a location update), it is required to select a sub business network by adopting the following ways:
deciding by the access node, that is, the terminal accesses from the eNodeB, the eNodeB selects a sub business network for the terminal to access from the multiple sub business networks connected; and
deciding by the terminal, that is, the terminal selects by itself the sub business network that it will access, and then notifies it to the eNodeB.

The access node, the terminal and the processing of selecting the sub business network by the terminal in the communication network of the present embodiment will be elaborated in the following embodiments.

The communication network of the present embodiment deploys the differentiation of business networks as multiple sub business networks, which provide services for different businesses, thereby reducing the pressure of centralized deployment of the business networks. The terminal or the access node can flexibly select the sub business network which is suitable for access, so user experience is improved.

### Second Embodiment

The present embodiment provides an access method adopting the way of deciding by the access node, which is applied to the access node connected to multiple sub business networks. The multiple sub business networks are arranged to provide services for different businesses. In an example, the sub business network is the sub business network included in the CN (e.g. the EPC) in the mobile network architecture. The access node is the base station (e.g. the eNodeB) in the mobile network architecture, or can be the terminal access device in the next-generation mobile network architecture. There may not be a clear boundary between the CN and the base station in 5G mobile network architecture.

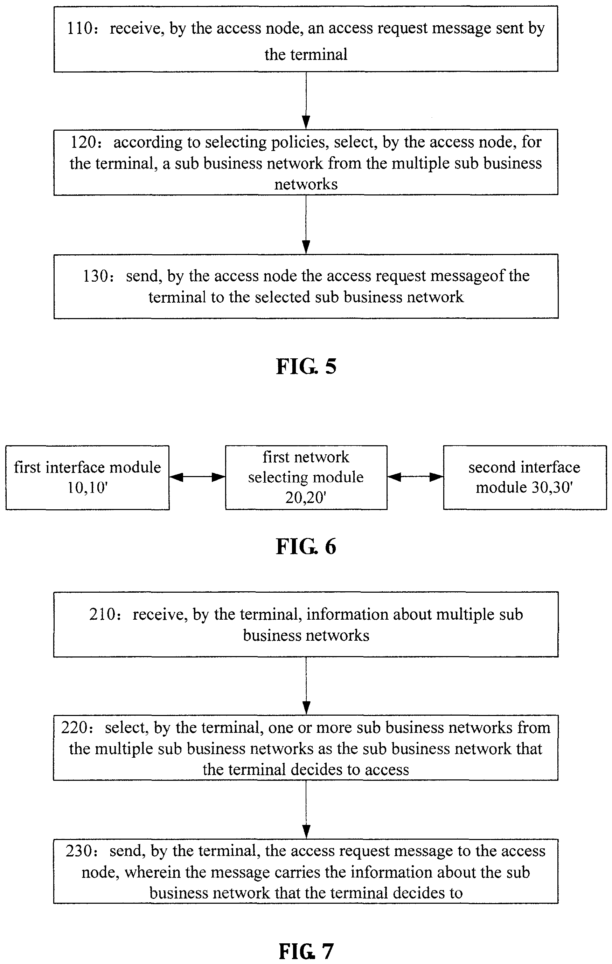

As shown in FIG. 5, the access method of the present embodiment includes the following steps.

In S110, the access node receives an access request message sent by the terminal.

In this action, the access request message sent by the terminal may be, for example, an attachment request message sent during an initial access, and a location area update message sent during a location area update. The location area may be multiple location-related areas defined in the network, such as a tracking area, a routing area, a location area and other defined areas.

In S120: according to selecting policies, the access node selects a sub business network for the terminal from the multiple sub business networks.

The selecting policies can be arranged in the access node or acquired from other nodes.

In S130, the access node sends the access request message of the terminal to the selected sub business network.

In this action, the access node may forward the access request message sent by the terminal, or send the message to the selected sub business network after encapsulating the message.

In S120, the selecting policies can be arranged by operators, and can include one or more of the following policy factors (namely information/parameters needed to be considered during selection):
a terminal attribute, including one or more of the followings: common mobile network terminal (e.g. the current 2G, 3G, and 4G terminals), Internet of Things terminal, Internet of Vehicles terminal, industrial control terminal, telemedicine terminal and low-mobility terminal, too many to mention here;
a terminal service, including one or more of the followings: mobile Internet service, virtual private network service, Internet of Things service, Internet of Vehicles service, industrial control service, telemedicine service, voice service, and D2D service, too many to mention here;
a sub business network load, which can be set as multiple levels; when the load is higher than the set threshold, the access may be failed; load balance can also be regarded as a factor considered;
a sub business network available state, that is, the sub business network is available or unavailable (e.g. the connection is broken); or
a sub business network that the terminal has accessed; the terminal moves after accessing a sub business network, and may need to access again, then the sub business network that the terminal has accessed can be regarded as a policy factor.

In above policy factors, information about the terminal attribute, information about the terminal service and information about the sub business network that the terminal has accessed can be carried in the access request message sent by the terminal. The terminal service is the service requested during access. The information about the terminal service may include an Access Point Name (APN) or a new field added by extending. There is a corresponding relationship between the APN and the terminal service, and the access node can identify the terminal service according to the APN. For example, a 4G terminal will decide the service required to be requested during attachment, including a connection establishment message. The APN in the connection establishment message represents the service. The access node can learn the sub business network load and the sub business network available state by detecting end to end or by notifying the sub business network.

The selecting policies include one or more of the following policies:
selecting the sub business network corresponding to a terminal attribute of the terminal;
selecting the sub business network corresponding to a terminal service of the terminal;
selecting the sub business network corresponding to a terminal attribute and a terminal service of the terminal;
when there is no sub business network corresponding to at least one of the terminal attribute or the terminal service of the terminal, a default sub business network is selected for the terminal;
when the non-default sub business network corresponding to at least one of the terminal attribute or the terminal service of the terminal is unavailable or the non-default sub business network's load is higher than the set threshold, a default sub business network is selected for the terminal; or
when the terminal has accessed to a sub business network, the sub business network that the terminal has accessed is selected preferentially.

In the embodiment, the corresponding relationship between at least one of the terminal attribute or the terminal service and the sub business network is locally stored at the access node, or can be acquired by looking up the other nodes by the access node. When there are both the terminal attribute and the terminal service, it is possible to establish a correspondence between each of them and the sub business network, or establish a correspondence between a combination of them and the sub business network (as the third policy above).

There can be one or more default sub business networks. When the terminal attribute and the terminal service correspond to the sub business network respectively, if there is no sub business network corresponding to the terminal attribute of the terminal (for example, there is on the terminal attribute in the saved corresponding relationship, or the access node is not connected to the sub business network corresponding to the terminal attribute), a default sub business network can be selected for it, however, it is possible to look up the corresponding sub business network according to the terminal service of the terminal; if the sub business network cannot be found, a default sub business network is selected for the terminal.

If all the selected sub business networks are unavailable or the load is too high, the access fails.

In an example, the eNodeB selects a sub CN according to the terminal attribute, as follows:
when the terminal is the Internet of Things terminal, accessing a sub EPC network 1;
when the terminal is the Internet of Vehicles terminal, accessing a sub EPC network 2;
when the terminal is the telemedicine terminal, accessing a sub EPC network 3; or
when the corresponding sub EPC network cannot be found according to the terminal attribute, accessing a default sub EPC network 1.

In another example, the eNodeB selects sub CN policies according to the terminal service, as follows:
when the terminal requests a special VPN service, accessing the sub EPC network 1;
when the terminal requests a VoLTE service, accessing the sub EPC network 2;
when the terminal requests a D2D service, accessing the sub EPC network 3; or
when the corresponding sub EPC network cannot be found according to the terminal service, accessing the default sub EPC network 1.

In another example, the eNodeB uses a combination of the terminal attribute and the terminal service to select the sub business network, as follows:
when the terminal is the Internet of Things terminal and requests the D2D service, accessing the sub EPC network 1; or
when the terminal is the Internet of Things terminal and requests the mobile Internet service, accessing the sub EPC network 2.

In another example, the eNodeB selects the sub business network in combination with the sub business network load and the sub business network available state, as follows:
when the sub EPC network (the non-default sub EPC network) selected according to the terminal service and the terminal attribute (respectively or in combination) is unavailable, selecting the default sub EPC network 1;
when the load of the sub EPC network (the non-default sub EPC network) selected according to the terminal service and the terminal attribute (respectively or in combination) is too high, selecting the default sub EPC network 1;
when the default sub EPC network 1 is selected for the terminal to access, but the default sub EPC network 1 is unavailable or its load is too high, refusing the user to access.

Correspondingly, the present embodiment also provides an access node; as shown in FIG. 6, the access node includes a first interface module 10, a first network selecting module 20 and a second interface module 30.

The first interface module 10 is arranged to receive the access request message sent by the terminal.

The first network selecting module 20 is arranged to select the sub business network for the terminal from the multiple sub business networks connected to the access node. The multiple sub business networks are arranged to provide services for different businesses.

The second interface module 30 is arranged to send the access request message of the terminal to the selected sub business network.

Optionally, the first network selecting module 20 is arranged to, according to the selecting policies, select a sub business network for the terminal from the multiple sub business networks. The selecting policies include one or more of the following policy factors:
the terminal attribute;
the terminal service;
the sub business network load;
the sub business network available state; or
the sub business network that the terminal has accessed.

Optionally, the selecting polices according to which the first network selecting module 20 selects the sub business network include one or more of the following policies:
selecting the sub business network corresponding to a terminal attribute of the terminal;
selecting the sub business network corresponding to a terminal service of the terminal; or
selecting the sub business network corresponding to a terminal attribute and a terminal service of the terminal.

Optionally, the selecting polices according to which the first network selecting module 20 selects the sub business network further include one or more of the following policies:
when there is no sub business network corresponding to at least one of the terminal attribute or the terminal service of the terminal, selecting a default sub business network for the terminal; or
when the non-default sub business network corresponding to at least one of the terminal attribute or the terminal service of the terminal is unavailable or its load is higher than the set threshold, selecting a default sub business network for the terminal.

Optionally, the selecting polices according to which the first network selecting module 20 selects the sub business network include: when the terminal has accessed to a sub business network, selecting preferentially the sub business network that the terminal has accessed.

Optionally, the access request message sent by the terminal, which is received by the first interface module 10, includes one or more of the following information:
the information about the terminal attribute;
the information about the terminal service; and
the information about the sub business network that the terminal has accessed.

Optionally, the terminal attribute includes one or more of the followings: a common mobile network terminal, an Internet of Things terminal, an Internet of Vehicles terminal, an industrial control terminal, a telemedicine terminal and a low-mobility terminal, too many to mention here;
the terminal service includes one or more of the followings: a mobile Internet service, a virtual private network service, an Internet of Things service, an Internet of Vehicles service, an industrial control service, a telemedicine service, a voice service, and a D2D service, too many to mention here.

Optionally, the sub business network is the sub business network included in the CN of the mobile network architecture or the sub business network that provides services for the terminal in the next-generation mobile network architecture. The access node is the base station in the mobile network architecture or the terminal access device in the next-generation mobile network architecture.

Optionally, the access request message sent by the terminal, which is received by the first interface module 10, includes one or more of the following messages:
the attachment request message; and
the location area update message.

### Third Embodiment

The present embodiment provides an access method adopting the way of deciding by the terminal, which is applied to the terminal of the communication network in the first embodiment. The communication network includes multiple sub business networks. The terminal needs to access a sub business network through the access node. In an example, the sub business network is the sub business network included in the CN (e.g. the EPC) in the mobile network architecture; the access node is the base station (e.g. the eNodeB) in the mobile network architecture or the terminal access device in the next-generation mobile network architecture.

As shown in FIG. 7, the access method in the present embodiment includes the following actions.

In S210: the terminal receives information about multiple sub business networks.

In this action, the terminal can acquire, the information about the multiple sub business networks from a broadcast message sent by the access node, but is not limited to it. For example, the information about the sub business network can also be saved in the terminal or agreed in an agreement as configuration information.

In S220, the terminal selects one or more sub business networks from the multiple sub business networks as the sub business network that it decides to access.

In this action, according to the selecting policies, the terminal selects one or more sub business networks from the multiple sub business networks. The selecting policies include one or more of the following policy factors: the information about the terminal attribute, the information about the terminal service, and the information about the sub business network that the terminal has accessed.

The selecting policies may include one or more of the following policies:
selecting the sub business network corresponding to a terminal attribute of the terminal;
selecting the sub business network corresponding to a terminal service of the terminal;
selecting the sub business network corresponding to a terminal attribute and a terminal service of the terminal; and
when the terminal has accessed a sub business network, preferentially selecting the sub business network that the terminal has accessed.

The terminal attribute of the terminal includes one or more of a common mobile network terminal, an Internet of Things terminal, an Internet of Vehicles terminal, an industrial control terminal, a telemedicine terminal and a low-mobility terminal (because the mobile network architecture of the present embodiment has integrated the Internet of Things, the Internet of Vehicles, the industrial control network and the telemedicine network, then the Internet of Things terminal, the Internet of Vehicles terminal, the industrial control terminal and the telemedicine terminal can be regarded as the special terminals of the mobile network), too many to mention here. The terminal service of the terminal includes one or more of a mobile Internet service, a virtual private network service, an Internet of Things service, an Internet of Vehicles service, an industrial control service, a telemedicine service, voice service, or a D2D service, too many to mention here.

The terminal attribute and the terminal service can correspond to the sub business network respectively, or correspond to the sub business network after being combined (as the third policy above). The terminal can acquire the corresponding relationship between at least one of the terminal attribute or the terminal service and the sub business network from the broadcast message sent by the access node; or, the corresponding relationship can also be saved locally or agreed in an agreement as the configuration information.

In an example, the policies according to which the terminal selects the sub CN according to its own service attribute are as follows:
when the terminal is the Internet of Things terminal, deciding to access the sub EPC network 1;
when the terminal is the Internet of Vehicles terminal, deciding to access the sub EPC network 2; and
when the terminal is the telemedicine terminal, deciding to access the sub EPC network 3.

In another example, the policies according to which the terminal selects the sub CN according to its own service attribute are as follows:
when the terminal requests the special VPN service, requesting to access the sub EPC network 1;
when the terminal requests the VoLTE service, preferentially accessing the sub EPC network 2; and
when the terminal requests the D2D service, preferentially accessing the sub EPC network 3.

In another example, the terminal uses both the terminal attribute and the terminal service to select the sub business network, as follows:
when the terminal is the Internet of Things terminal and requests the D2D service, preferentially accessing the sub EPC network 1;
when the terminal is the Internet of Things terminal and requests the mobile Internet service, preferentially accessing the sub EPC network 2.

In S230, the terminal sends the access request message to the access node. The message carries the information about the sub business network that the terminal decides to access.

In this action, the access request message may include one or more of the following messages: the attachment request message; or the location area update message.

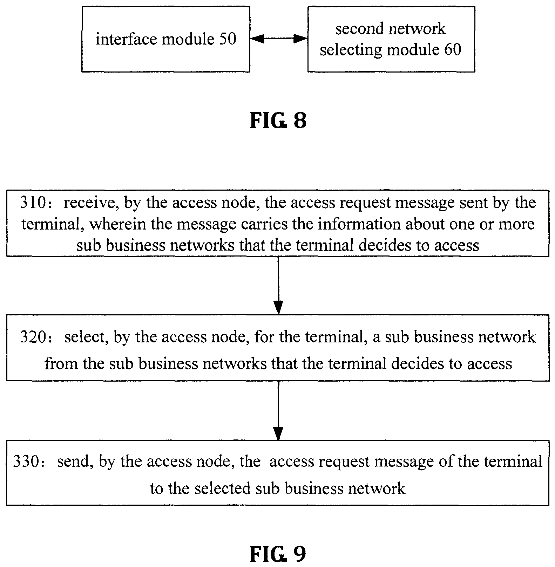

Correspondingly, the present embodiment also provides a terminal; as shown in FIG. 8, the terminal includes an interface module 50 and a second network selection module 60.

The interface module 50 is arranged to acquire information about multiple sub business networks, and send the access request message to the access node. The message carries the information about the sub business network that a second network selecting module 60 decides to access.

The second network selection module 60 is arranged to select one or more sub business networks from the multiple sub business networks acquired by the interface module 50 as the sub business network that the second network selection module decides to access.

Optionally, the second network selecting module 60 is arranged to: according to the selecting policies, select one or more sub business networks from the multiple sub business networks. The selecting policies include one or more of the following policy factors:
the terminal attribute;
the terminal service; or
the sub business network that the terminal has accessed.

Optionally, the selecting polices according to which the network selecting module selects one or more sub business networks include one or more of the following policies:
selecting the sub business network corresponding to a terminal attribute of the terminal;
selecting the sub business network corresponding to a terminal service of the terminal;
selecting the sub business network corresponding to a terminal attribute and a terminal service of the terminal; or
when the terminal has accessed a sub business network, preferentially selecting the sub business network that the terminal has accessed.

Optionally, the interface module 50 is further arranged to acquire from the broadcast message sent by the access node, the corresponding relationship between at least one of the terminal attribute or the terminal service and the sub business network.

Optionally, the terminal attribute of the terminal includes one or more of a common mobile network terminal, an Internet of Things terminal, an Internet of Vehicles terminal, an industrial control terminal, a telemedicine terminal and a low-mobility terminal, too many to mention here.

The terminal service of the terminal includes one or more of a mobile Internet service, a virtual private network service, an Internet of Things service, an Internet of Vehicles service, an industrial control service, a telemedicine service, a voice service, and a D2D service, too many to mention here.

Optionally, the terminal is under the mobile network architecture, and the access node is the base station in the mobile network architecture or the terminal access device in the next-generation mobile network architecture.

Optionally, the action of acquiring, by the interface module 50, the information about the multiple sub business networks, includes:
acquiring the information about the multiple sub business networks from the broadcast message sent by the access node.

In the embodiment, it is the terminal making a decision to select to access the sub business network. As shown in FIG. 9, the corresponding processing of the access node includes the following actions.

In S310, the access node receives the access request message sent by the terminal. The message carries the information about one or more sub business networks that the terminal decides to access.

In this action, the access request message may include the attachment request message, the location area update message, and so on.

In S320, the access node selects a sub business network for the terminal from the sub business networks that the terminal decides to access.

When there is only one sub business network that the terminal decides to access, the sub business network is selected directly.

When there are multiple sub business networks that the terminal decides to access, the access node can select one from the multiple sub business networks. For example, the first sub business network can be selected, or in combination with a load condition of the related sub business network, the sub business network can be selected according to a rule of load balance.

When all the sub business networks that the terminal decides to access are unavailable or their loads are too high, the access fails.

In S330, the access node sends the access request message of the terminal to the selected sub business network.

Optionally, the access node also broadcasts one or more of the following information to the terminal:
the information about the multiple sub business networks connected, or the information about the current available sub business network in the multiple sub business networks;
the corresponding relationship between at least one of the terminal attribute or the terminal service and the sub business network.

Correspondingly, as shown in FIG. 6, the modules included in the access node of the present embodiment may include a first interface module 10', a second network selecting module 20' and a second interface module 30'.

The first interface module 10' is arranged to receive the message of the access request sent by the terminal. The message carries the information about one or more sub businesses networks that the terminal decides to access.

The second network selecting module 20' is arranged to select a sub business network for the terminal from the sub business networks that the terminal decides to access.

The second interface module 30' is arranged to send the access request message of the terminal to the selected sub business network.

Optionally, the first interface module 30 is further arranged to broadcast one or more of the following information to the terminal:
the information about the multiple sub business networks connected to the access node, or the information about the current available sub business network in the multiple sub business networks;
the corresponding relationship between at least one of the terminal attribute or the terminal service and the sub business network.

An elaboration is given below in combination with several application examples.

### First Application example

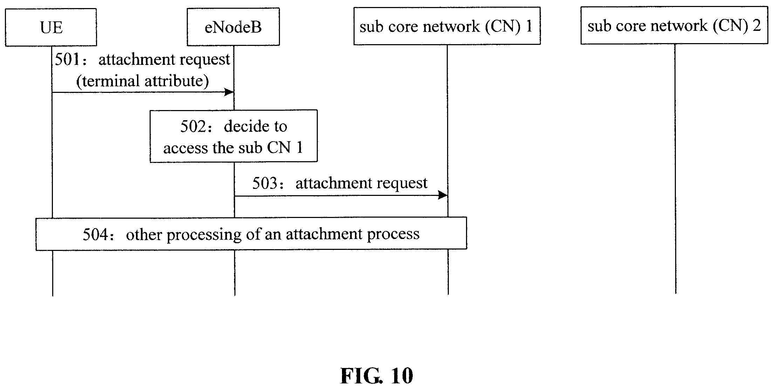

As shown in FIG. 10, by taking the 4G network architecture for example, the eNodeB uses the terminal attribute as the policy factor to select a CN (sub CN) for the terminal to access.

In S501, when being covered by the eNodeB connected to both the sub CN1 and the sub CN2, the UE initiates an attachment request. The attachment request carries the terminal attribute;

In S502, according to the terminal attributer, the eNodeB selects the corresponding sub CN1 for the UE to access.

In S503, the eNodeB sends the attachment request to the sub CN1.

In S504, the sub CN1 enables the UE to access according to a 4G attachment flow.

### Second Application example

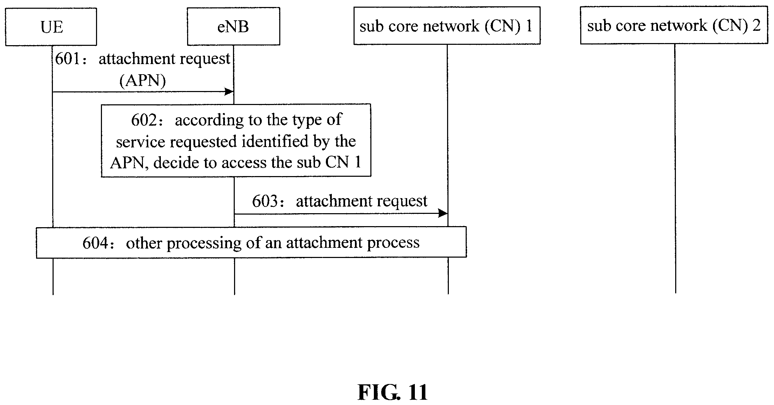

As shown in FIG. 11, by taking the 4G network architecture for example, the eNodeB uses the terminal service as the policy factor to select a CN for the terminal to access.

In S601, when being covered by the eNodeB connected to both the sub CN1 and the sub CN2, the UE initiates an attachment request. Signaling carries APN information.

In S602, eNodeB selects the corresponding sub CN1 to access according to the terminal service identified by the APN.

In S603, the eNodeB sends the attachment request to the sub CN1.

In S604, the sub CN1 enables the UE to access according to the 4G attachment flow.

### Third Application example

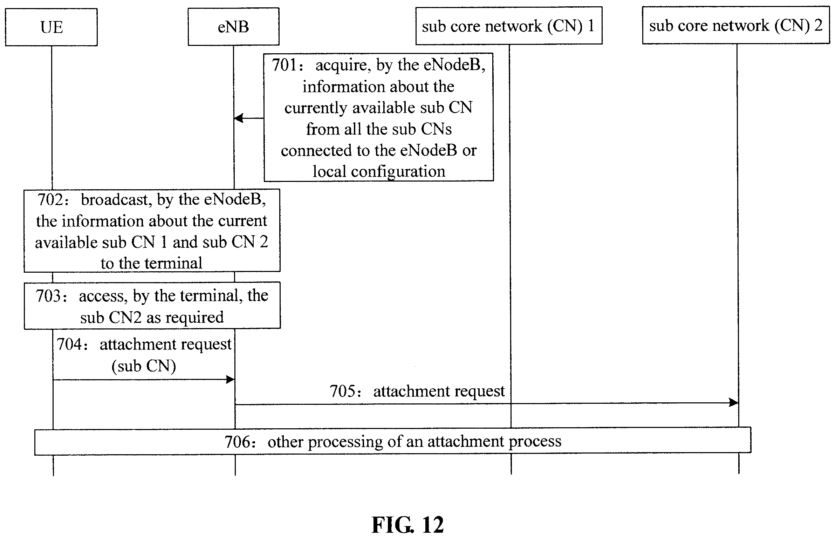

As shown in FIG. 12, by taking the 4G network architecture for example, the terminal decides to select the sub CN to access.

In S701, the eNodeB acquires information about the current available sub CN from all the sub CNs connected to the eNodeB or local configurations.

In S702, the eNodeB broadcasts, at an air interface, the information about the current available sub CN1 and sub CN2 to the terminal;

In S703, the UE decides to access the sub CN2 according to at least one of the terminal attribute or terminal service of the terminal.

In S704, the UE initiates the attachment request to the eNodeB. The attachment request carries the identifier of the sub CN2;

In S705, the eNodeB sends the attachment request to the sub CN2.

In S706, the sub CN2 enables the UE to access according to the 4G attachment flow.

### Fourth Application example

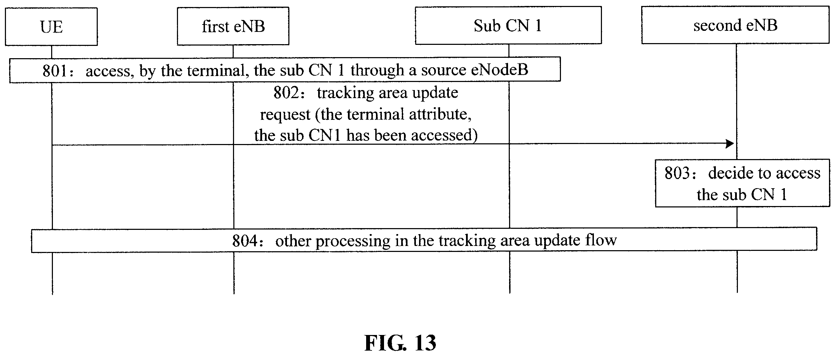

As shown in FIG. 13, by taking the 4G network architecture for example, the terminal moves in an idle state, and when its location is updated, the eNodeB selects the sub CN for the terminal to access.

In S801, the UE accesses through the first eNodeB, establishes a connection with the sub CN1, and is in an idle state;

In S802, the UE moves to a coverage range of the second eNodeB, and updates a tracking area update request. The request carries the information about the terminal attribute and indication information about the sub CN1 that the UE has accessed.

In S803, the second eNodeB preferentially selects the sub CNlthat has been accessed for the UE to access.

In S804, the sub CN1 enables the UE to access according to a 4G tracking area update flow.

### Fifth Application example

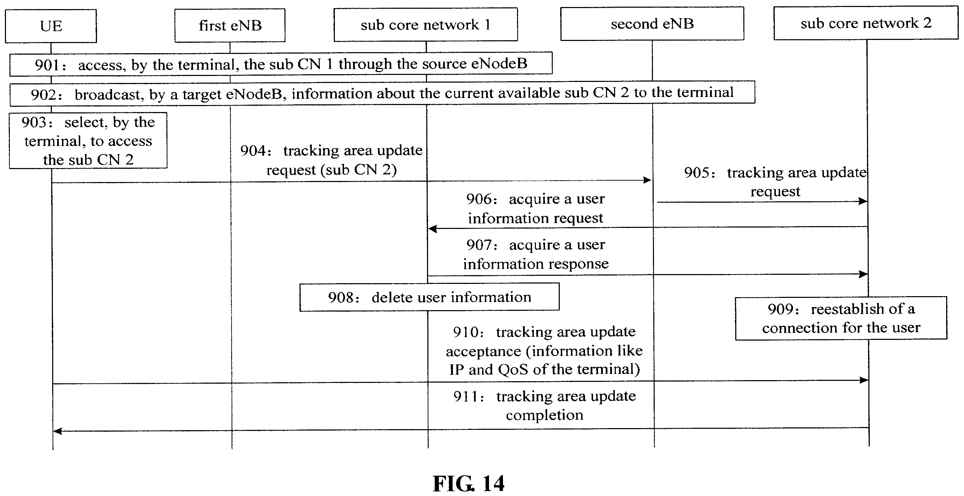

As shown in FIG. 14, by taking the 4G network architecture for example, after the terminal in an idle state moves to the range of another business network, it reselects the business network.

In S901: the UE accesses through the first eNodeB, establishes a connection with the sub CN1, and is in an idle state.

In S902, the UE moves to a coverage range of the second eNodeB (the second eNodeB and the first eNodeB belong to the different business networks), and receives the information about the available sub CN2 and sub CN3 broadcasted by the second eNodeB;

In S903, because there is no the sub CN1 that has been accessed in the broadcasted sub CNs, the UE decides to access the sub CN2 according to the terminal attribute and/or terminal service.

In S904, the UE initiates the tracking area update request. The request carries the identifier of the sub CN2;

In S905, the second eNodeB sends the tracking area update request to the sub CN2.

In S906, the sub CN2 acquires user information from the sub CN1.

In S907, the sub CN1 sends the user information to the sub CN2.

In S908, the sub CN1 deletes the user information, including a mobility management context and a bearer context of the user, from the network.

In S909, the sub CN2 reestablishes the mobility management context and the bearer context for the user.

In S910, the sub CN2 initiates a tracking area update acceptance message to the user, and sends the bearer information, e.g. an IP address of the user and QoS, reestablished for the user to the terminal.

In S911, the terminal returns a tracking area update completion message.

The sub business networks included in different business networks (e.g. the EPC networks constructed by different operators) may be different, or the same partly or completely.

### Sixth Application example

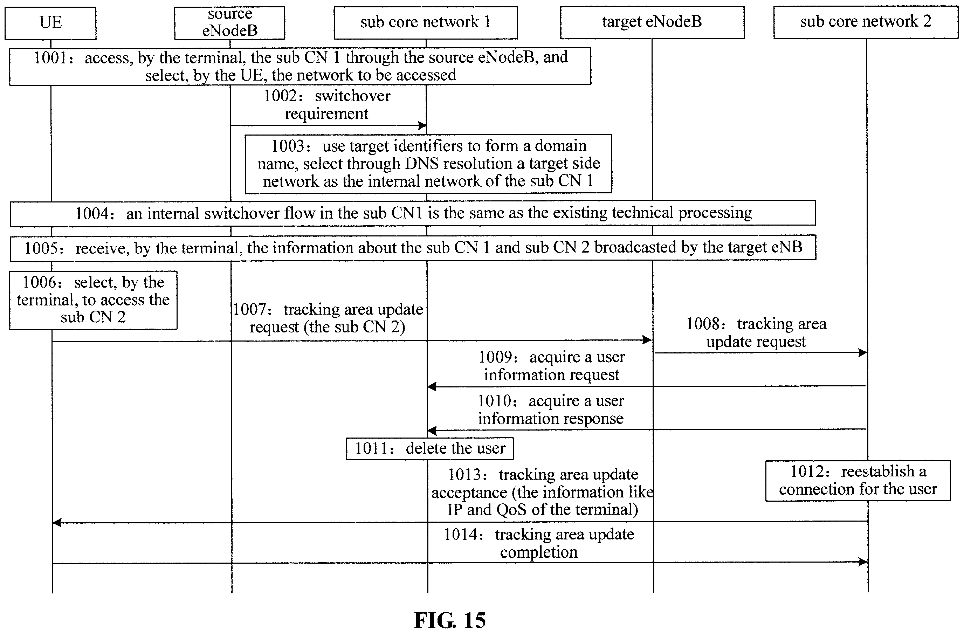

As shown in FIG. 15, by taking the 4G network architecture for example, the terminal moves in a connection state, a network side performs switchover in the same network, after the switchover is completed, the UE reselects the sub business network according to the tracking area update flow.

In S1001, the UE accesses through a source eNodeB, establishes a connection with the sub CN1, and is in the connection state. The UE selects to access the network during the access.

In S1002, the UE moves the coverage range of a target eNodeB, the source eNodeB judges that a switchover threshold is reached, and the UE initiates a switchover requirement to the sub CN 1. The target eNodeB is connected to the sub CN1 and the sub CN2 at the same time.

In S1003, the sub CN 1 uses target identifiers in a switchover requirement message to form a domain name, and through DNS resolution, preferentially selects the target network as the same network, namely the sub CN 1.

In S1004, an internal switchover flow in the sub CN 1 is the same as the existing technical processing, which can be a cross-MME switchover or a switchover in the MME.

In S1005, the UE receives in the scope of the target eNodeB the information about the available sub CN1 and sub CN2 broadcasted by the air interface.

In S1006, after the switchover is completed, the UE decides to access the sub CN2.

Here, the terminal requires to request different services when accessing, reselection of the network is triggered.

In S1007, the UE initiates the tracking area update request. The request carries the identifier of the sub CN2.

In S1008, the target eNodeB sends the tracking area update request to the sub CN2.

In S1009, the sub CN2 acquires the user information from the sub CN1.

In S1010, the sub CN1 sends the user information to the sub CN2.

In S1011, the sub CN1 deletes the user information, including the mobility management context and the bearer context of the user, from the network.

In S1012, the sub CN2 reestablishes the mobility management context and the bearer context for the user.

In S1013, the sub CN2 initiates the tracking area update acceptance message to the user, and sends the bearer information, e.g. the IP address of the user and the QoS, reestablished for the user to the terminal.

In S1014, the terminal returns the tracking area update completion message.

Those ordinary skill in the art may understand that all or a part of the steps in the embodiments can be performed by a computer program flow; the computer program may be stored in a computer readable storage medium; when the computer program is performed on a corresponding hardware platform (e.g. a system, a piece of UE, a device, and a component), one or a combination of the steps in the embodiment of the method.

Optionally, all or part of the steps of the embodiments may also be implemented by using integrated circuits. These steps can be separately made into integrated circuit modules, or multiple modules or steps of them can be implemented by being made into a single integrated circuit module.

The above devices/functional modules/functional units in the embodiments can be implemented by a general-purpose computing device, and they can be centralized in a single computing device or distributed on a network composed of multiple computing devices.

When being implemented in form of software function module and sold or used as an independent product, the above devices/functional modules/functional units in the embodiments may also be stored in a computer-readable storage medium. The computer-readable storage medium may be an ROM, a magnetic disk or a compact disk.

### INDUSTRIAL APPLICABILITY

Through the disclosure, the differentiation of business networks is deployed as multiple sub business networks, which provide services for different businesses, thereby reducing the pressure of centralized deployment of the business networks. The terminal or the access node can flexibly select the sub business network which is suitable for access, so user experience is improved.

## Claims

1. An access method, which is applied to an access node connected to a plurality of sub business networks, wherein the plurality of sub business networks are arranged to provide services for different businesses, the method comprising:
receiving an access request message sent by a terminal;
selecting, for the terminal, a sub business network from the plurality of sub business networks; and
sending the access request message of the terminal to the selected sub business network.

2. The method according to claim 1, wherein, selecting, for the terminal, the sub business network from the plurality of sub business networks comprises:
according to selecting policies, selecting, for the terminal, a sub business network from the plurality of sub business networks; the selecting policies comprise one or more of the following policy factors:
a terminal attribute;
a terminal service;
a sub business network load;
a sub business network available state; or
a sub business network that the terminal has accessed.

3. The method according to claim 2, wherein, the selecting policies comprise one or more of the following policies:
selecting the sub business network corresponding to a terminal attribute of the terminal;
selecting the sub business network corresponding to a terminal service of the terminal; or
selecting the sub business network corresponding to a terminal attribute and a terminal service of the terminal.

4. The method according to claim 3, wherein,
the selecting policies comprise one or more of the following policies:
when there is no sub business network corresponding to at least one of the terminal attribute or the terminal service of the terminal, selecting a default sub business network for the terminal; or
when a non-default sub business network corresponding to at least one of the terminal attribute or the terminal service of the terminal is unavailable or a load of the non-default sub business network is higher than a set threshold, selecting a default sub business network for the terminal.

5. The method according to claim 2 or 3 or 4, wherein,
the selecting policies comprise: when the terminal has accessed to a sub business network, preferentially selecting the sub business network that the terminal has accessed.

6. The method according to claim 2 or 3 or 4, wherein,
the access request message sent by the terminal carries one or more of the following information:
information about the terminal attribute;
information about the terminal service; or
information about the sub business network that the terminal has accessed.

7. The method according to claim 2 or 3 or 4, wherein,
the terminal attribute comprises one or more of the followings: a common mobile network terminal, an Internet of Things terminal, an Internet of Vehicles terminal, an industrial control terminal, a telemedicine terminal or a low-mobility terminal;
the terminal service comprises one or more of the followings: a mobile Internet service, a virtual private network service, an Internet of Things service, an Internet of Vehicles service, an industrial control service, a telemedicine service, a voice service, or a Device to Device (D2D) service.

8. The method according to claim 1, wherein,
the access request message sent by the terminal carries information about one or more sub business networks that the terminal decides to access;
selecting, for the terminal, a sub business network from the plurality of sub business networks comprises: selecting, for the terminal, a sub business network from the sub business networks that the terminal decides to access.

9. The method according to any one of claims 1 to 4, and 8, further comprising: broadcasting one or more of the following pieces of information to the terminal:
information about the plurality of sub business networks connected to the access node, or information about a currently available sub business network in the plurality of sub business networks; or
a corresponding relationship between at least one of the terminal attribute or the terminal service and the sub business network.

10. The method according to claim 1, wherein,
the sub business network is a sub business network comprised in a Core Network (CN) of a mobile network architecture, or is a sub business network that provides a service for a terminal in a next-generation mobile network architecture; the access node is a base station in the mobile network architecture or a terminal access device in the next-generation mobile network architecture.

11. The method according to any one of claims 1 to 4, 8 and 10, wherein,
the access request message sent by the terminal comprises one or more of the following messages:
an attachment request message; and
a location area update message.

12. An access method, which is applied to a terminal, the method comprising:
acquiring information about a plurality of sub business networks;
selecting one or more sub business networks from the plurality of sub business networks as sub business networks that the terminal decides to access; and
sending an access request message to an access node, wherein the message carries information about the sub business networks that the terminal decides to access.

13. The method according to claim 12, wherein,
selecting one or more sub business networks from the plurality of sub business networks comprises: according to selecting policies, selecting one or more sub business networks from the plurality sub business networks;
the selecting policies comprise one or more of the following policy factors:
a terminal attribute;
a terminal service; and
a sub business network that the terminal has accessed.

14. The method according to claim 13, wherein, the selecting policies comprise one or more of the following policies:
selecting a sub business network corresponding to a terminal attribute of the terminal;
selecting a sub business network corresponding to a terminal service of the terminal;
selecting a sub business network corresponding to a terminal attribute and a terminal service of the terminal; or
when the terminal has accessed a sub business network, preferentially selecting the sub business network that the terminal has accessed.

15. The method according to claim 13 or 14, further comprising:
acquiring, by the terminal, from a broadcast message sent from the access node, a corresponding relationship between at least one of the terminal attribute or the terminal service and the sub business network.

16. The method according to claim 13 or 14, wherein,
the terminal attribute of the terminal comprises one or more of a common mobile network terminal, an Internet of Things terminal, an Internet of Vehicles terminal, an industrial control terminal, a telemedicine terminal and a low-mobility terminal;
the terminal service of the terminal comprises one or more of a mobile Internet service, a virtual private network service, an Internet of Things service, an Internet of Vehicles service, an industrial control service, a telemedicine service, a voice service, and a Device to Device (D2D) service.

17. The method according to claim 12, wherein,
the terminal is a terminal of a mobile network architecture; and the access node is a base station in the mobile network architecture or an access device in a next-generation mobile network architecture.

18. The method according to any one of claims 12 to 14, and 17, wherein, acquiring the information about the plurality of sub business networks comprises:
acquiring the information about the plurality of sub business networks from a broadcast message sent by the access node.

19. An access node, comprising:
a first interface module, which is arranged to receive an access request message sent by a terminal;
a first network selecting module, which is arranged to select, for a terminal, a sub business network from a plurality of sub business networks connected to the access node; wherein, the plurality of sub business networks are arranged to provide services for different businesses; and
a second interface module, which is arranged to send the access request message of the terminal to the selected sub business network.

20. A communication network, comprising an access network and a business network;
the business network comprises a plurality of sub business networks, wherein the plurality of business networks are arranged to provide services for different businesses;
the access network comprises an access node connected to the plurality of sub business networks, wherein the access node is arranged to select, from the plurality of sub business networks connected to the access node, a sub business network for the terminal to access.

21. A terminal, comprising:
an interface module, which is arranged to acquire information about a plurality of sub business networks, and send an access request message to an access node, wherein the message carries information about a sub business network that a second network selecting module decides to access;
the second network selecting module, which is arranged to select one or more sub business networks from the plurality of sub business networks acquired by the interface module as the sub business network that the second network selecting module decides to access.

22. A computer readable storage medium, in which a computer executable instruction is stored; the computer executable instruction is used for performing a method according to any one of claims 1 to 18.
